# EUROPÄISCHE PATENTSCHRIFT

(11) **EP 0 455 085 B1**
(45) Veröffentlichungstag und Bekanntmachung des Hinweises auf die Patenterteilung: **16.03.1994**
(21) Anmeldenummer: 91106425.1
(22) Anmeldetag: 22.04.1991
(51) Int. Cl.: F16G 11/12, B60P 7/08

(54) **Spannratsche für einen Zurrstrang**
Ratchet tensioning device for a lashing line
Dispositif de tension à cliquet pour lien d'arrimage

(30) Priorität: 03.05.1990 DE 9005003 U; 08.03.1991 DE 9102777 U
(43) Veröffentlichungstag der Anmeldung: 06.11.1991
(73) Patentinhaber: SPANSET INTER AG, CH-8618 Oetwil am See (CH)
(72) Erfinder: Kämper, Hans-Werner, W-8102 Würselen (DE)
(74) Vertreter: Tergau, Enno, Dipl.-Ing.

(56) Entgegenhaltungen:
- DE-A- 3 344 487
- DE-U- 8 536 678
- FR-A- 2 424 152
- GB-A- 2 105 805
- GB-A- 2 108 616

## Beschreibung

Die vorliegende Erfindung betrifft eine Spannratsche für Zurrstränge, die einen Zurrstrang über ein Gesperre schrittweise mit einer beispielsweise zur Sicherung von Transportgütern notwendigen Zurrspannung beaufschlagt. Solche Zurrstränge können als textile Zurrgurte, Ketten, Stahltrossen, Seile etc. ausgeführt sein. Aus der
**DE-C 3** **344 487**
ist eine Spannratsche bekannt. Das Gesperre dieser bekannten Spannratsche besteht aus einem Sperrad mit einer gerichteten Verzahnung und zwei nebeneinander parallellaufenden, in einem gemeinsamen Führungsschlitz gelagerten Sperrschiebern. Durch die beiden Sperrschieber sollen die Sperrsprünge des Gesperres unter Beibehaltung eines relativ großen Zahnteilungswinkels verkleinert werden, wie dies aus Lueger, Lexikon der Technik, Band 1,1960, S. 530, bekannt ist.

Die Zurrspannung bei der bekannten Spannratsche ist zwar in kleinen Schritten aufbaubar, so daß der Zurrstrang mit einer hohen Zurrspannung beaufschlagt werden kann. Beim Lösen des Zurrstranges aber wird die im Zurrstrang wirksame Zurrspannung schlagartig abgebaut. Während des Transportes kann auch bei hoher Zurrspannung durch Versetzungen der Ladung der Zurrstrang mit zusätzlichen Spannungen beaufschlagt werden, wodurch beim Lösen ein sogenannter "Peitscheneffekt" am Zurrstrang entsteht. Dieser Peitscheneffekt beinhaltet für die mit dem Handling des Transportgutes betraute Entlademannschaft ein vergleichsweise hohes Verletzungs- und damit Sicherheitsrisiko.

Ein weiterer Nachteil der bekannten Ratsche besteht darin, daß eine verrutsche Ladung nach dem Lösen des Gesperres nicht mehr standfest vom Zurrstrang gehalten wird.

Der Erfindung liegt die Aufgabe zugrunde, eine Spannratsche der eingangs genannten Art zu verbessern und ihre Gebrauchssicherheit und Gebrauchsfreundlichkeit zu steigern. Diese Aufgabe ist durch die Merkmalskombination des Anspruchs 1 gelöst.

Die erfindungsmäßige Lösung besteht darin, eine Spannratsche mit zwei Zahnrichtgesperren zu versehen. Ein mit der Aufwickelwelle der Vorrichtung fest verbundenes Sperrad mit einer gerichteten Verzahnung dient als gemeinsames Sperrstück für die beiden Gesperre. Das zwischen Spannhebel und Aufwickelwelle wirksame Antriebsgesperre weist einen im Spannhebel längsverschiebbar gelagerten, nach Art eines Mitnehmers in die Verzahnung eingreifenden Antriebsschieber zum Drehantrieb der Aufwickelwelle auf. Das zwischen Konsole und Aufwickelwelle wirksame Rückdrehsicherungsgesperre weist zwei in der Konsole längsverschiebbar gelagerte, am Umfang des Sperrades versetzt angeordnete Sperrschieber als Sperrer auf. Die beiden in unterschiedlichen Konsolführungsschlitzen verfahrbar gelagerten Sperrschieber sind am Umfang des Sperrades derart verteilt, daß beide Sperrschieber jeweils abwechselnd mit dem Sperrad in Eingriff sind. Ist also ein Sperrschieber mit dem Sperrad in Eingriff, ist der andere Sperrschieber außer Eingriff.

Vorteilhaft an dieser Sperrschieberanordnung ist -ebenso wie beim Stand der Technik- die Möglichkeit, die Aufwickelwelle in kleinen, einer halben Zahnteilung entsprechenden Schritten spannen zu können. Die jeweils für einen Spannschritt erforderliche Spannkraft reduziert sich somit vorteilhaft.

Der erfinderische Leitgedanke besteht darin, die auf den Zurrstrang wirkende Zurrspannung nicht nur schrittweise aufzubauen, sondern ebenfalls schrittweise abzubauen. Der über den Antriebsschieber die Aufwickelwelle drehantreibende Spannhebel ist mit seinem Lagerende an der Aufwickelwelle schwenkbar gelagert und weist am Umfang seines Lagerendes eine radial aus dem Umfang hinausstehende Entriegelungsnocke auf. Zum schrittweisen Abbau der den Zurrstrang beaufschlagenden Zurrspannung ist der Antriebsschieber in einer Außereingriffstellung mit der Verzahnung inaktivierbar und der Spannhebel derart in Spannrichtung von der Konsole wegschwenkbar, daß die Entriegelungsnocke jeweils einen der Sperrschieber aus der Verzahnung ausrückend in seine Entriegelungsstellung verfährt. Durch ein abwechselndes Schwenken des Spannhebels einmal in Spannrichtung und das andere Mal gegen die Spannrichtung sind beide Sperrschieber jeweils abwechslend inaktivierbar.

Durch die geschilderte Hin- und Herbewegung des Spannhebels wird die den Zurrstrang beaufschlagende Zurrspannung schrittweise abgebaut, der Zurrstrang also schrittweise gelöst. Ist das Transportgut während des Transports verrutscht oder wird während des Lösens festgestellt, daß das Transportgut nicht mehr sicher auf der Transportfläche ruht, muß lediglich die Antriebsklinke durch Verfahren in die Verzahnung wieder aktiviert werden, um den Zurrstrang zur Sicherung des Transportguts wieder zu spannen. Ist das Transportgut wieder mit der vollständigen Zurrspannung beaufschlagt, ist es möglich, die erforderlichen Maßnahmen zur sicheren Entladung des verrutschten Transportgutes ohne Zeitdruck zu treffen. Der Hauptvorteil der Vorrichtung besteht also in einer Steigerung der Gebrauchssicherheit beim Lösen des Zurrstranges zum Entladen des Transportmittels. Weiterhin vorteilhaft ist die Vermeidung des genannten Peitscheneffekts durch die iterative Entriegelung der Spannratsche.

Durch die in Anspruch 2 beschriebene benachbarte Lage von Entriegelungsnocke und Steuerkurve, wobei die Entriegelungsnocke in Spannrichtung der Steuerkurve vorauseilend angeordnet ist, verbessert die Handhabung der Spannratsche zusätzlich. Bedienungsfreundlich schwenkt der zunächst auf der Konsole aufliegende Spannhebel in Spannrichtung zuerst in den Sperrbereich der Spannratsche. Durch Weiterschwenken in Spannrichtung erreicht der Spannhebel den Lösebereich, in dem die Entriegelungsnocke die Sperrschieber wechselseitig außer Eingriff mit der Verzahnung des Sperrades verfährt. Ist die Zurrspannung derart abgebaut, daß der Zurrstrang nur noch locker um das Transportgut liegt, sind die beiden Sperrschieber durch Weiterverschwenken des Spannhebels in Spannrichtung mittels der Steuerkurve gemeinsam außer Eingriff bringbar. Der auf der Aufwickelwelle noch verbliebene Zurrstrangwickel ist so leicht durch einfaches Ziehen am Zurrstrang von der Aufwickelwelle abwickelbar. Die Lehre von Anspruch 2 ermöglicht die bedienungseinfache Anordnung der Sperrstellung, der Lösestellung und der Öffnungsstellung des Spannhebels hintereinander.

Die Ansprüche 3 bis 5 lehren die fertigungstechnisch günstige und konstruktiv einfache Gestaltung des Spannhebels. Der am Griffende dem Spannhebellagerende gegenüberliegend angeordnete Handgriff dient einerseits als überbrückende Querverbindung zwischen den Spannhebelseitenwänden und andererseits als Handgriff zum Verschwenken des Spannhebels. Die filigrane Ausführung des Spannhebels reduziert das Spannhebeleigengewicht vorteilhaft.

Das zwischen den Spannhebelseitenwänden überbrückend einliegende Querverbindungsjoch stabilisiert den Aufbau des Spannhebels weiter und dient als solides Widerlager für den druckbeaufschlagten Antriebsschieber. Der Antriebsschieber ist mittels seines Greifbügels leicht aus der Verzahnung heraus verfahrbar. Der Handgriff und der Greifbügel sind hierfür derart angeordnet, daß sich zum Verfahren des Antriebsschiebers aus der Verzahnung die Hand des Bedieners am Handgriff abstützt und der Mittelfinger und der Ringfinger den Greifbügel durchgreifend und in Richtung auf den Handgriff ziehend den Antriebsschieber längsverfahren.

Die Ansprüche 6 bis 9 lehren einen konstruktiv einfachen und fertigungstechnisch vorteilhaften Aufbau der Konsole. Die Konsole weist ein an ihrer Solidität gemessenes geringes Eigengewicht auf. Durch die gabelartige Gestaltung beider Konsolenfreienden ist einerseits das Zurrstrangfestende leicht an der Konsole fixierbar und andererseits die Aufwickelwelle leicht in die Konsole einbringbar. Es ist jedoch auch möglich, die Konsole mit ihrem Befestigungsfreiende direkt an einem Transportmittel, beispielsweise auf der Ladefläche eines Lastkraftwagens, zu montieren.

Weiterhin vorteilhaft ist der symmetrische Aufbau der Spannratsche nach Anspruch 9. Aufgrund der Symmetrie können zahlreiche Gleichteile verwendet werden, was die Fertigungsstückkosten für die Spannratsche senkt. Zudem zieht der symmetrische Aufbau der Spannratsche eine symmetrische Kraftverteilung an der Spannratsche bei anliegender Zurrspannung nach sich.

Durch die Maßnahmen nach den Anspruchen 10 und 11 wird verhindert, daß der Spannhebel durch ein versehentliches Überdrehen in Spannrichtung vom Spannbereich irrtümlich in den Lösebereich überführt wird.

Die Gestaltung des Lösebereichs nach den Ansprüchen 12 bis 15 verbessert die Gebrauchsfreundlichkeit und Gebrauchssicherheit der Spannratsche. Der Spannhebel muß zum Lösen der Zurrspannung lediglich in den Lösebereich verschwenkt werden und zwischen den Begrenzungsanschlägen hin- und herbewegt werden. Mit jedem Anschlag des Antriebsschiebers an einem der beiden Begrenzungsanschläge dreht die Aufwickelwelle um den Betrag einer halben Zahnteilung gegen die Spannrichtung zurück. Das schrittweise Entspannen ist somit einfach und gebrauchssicher möglich.

Durch die Gestaltung der Sperrschieber nach den Ansprüchen 16 bis 20 ist die Wirkungsweise der Spannratsche weiter verbessert. Die so gestalteten Sperrschieber sind leicht zwischen ihren Extremstellungen längsverfahrbar und können hohe Kräfte übertragen. Die Sperrschieber sind in den Konsolführungsschlitzen leicht montierbar und bilden einen robusten und dauerhaften Formschluß mit der Konsole.

Die gekrümmte Ausführung der Sperrschieber nach den Ansprüchen 21 bis 23 verringert die Bauhöhe der Spannratsche. Die flachbauende Spannratsche fügt sich harmonisch insbesondere in textile Zurrstränge ein. Ferner benötigt die Spannratsche aufgrund ihrer geringeren Bauhöhe weniger Transport- bzw. Lagerraum. Außerdem steht die Spannratsche nicht so weit aus dem Zurrstrang hervor, so daß das Verletzungsrisiko gesenkt und damit die Gebrauchssicherheit der Spannratsche gesteigert wird.

Die Erfindung wird anhand der in den Zeichnungen dargestellten Ausführungsbeispiele mit weiteren erfindungswesentlichen Merkmalen geschildert. Es zeigen:
- Fig. 1: eine perspektivische Gesamtdarstellung der erfindungsmäßigen Spannratsche,
- Fig. 2: eine Prinzipskizze des Spannvorgangs,
- Fig. 3: eine Prinzipskizze des Gesperres beim Übergang vom Sperrbereich in den Lösebereich,
- Fig. 4: eine Prinzipskizze des Gesperres im Lösebereich,
- Fig. 5: eine Prinzipskizze des Gesperres in einer extrem offenen Lösungsposition im Lösebereich,
- Fig. 6: eine Prinzipskizze des Gesperres in einer geschlosseneren Lösungsposition im Lösebereich,
- Fig. 7: eine Prinzipskizze der gesamten Ratsche in schrittweiser Lösungsposition im Lösebereich,
- Fig. 8: eine Prinzipskizze der gesamten Ratsche in total geöffneter Position bei einem Öffnungswinkel von 180° vom Spannhebel gegenüber der Konsole,
- Fig 9: die Seitenansicht einer Sonderausführungsform der Spannratsche mit gekrümmten Sperrschiebern.

Die erfindungsmäßige Spannratsche besteht im wesentlichen aus einem als Konsole 1 ausgebilden Grundkörper, einem Spannhebel 2, zwei Sperrädern 3,3' und einer diese tragenden Aufwickelwelle 4. Die Sperräder 3,3' bilden mit zwei an der Konsole 1 gelagerten Sperrschiebern 5,5' ein Rückdrehsicherungsgesperre.

Die Konsole 1 besteht ihrerseits aus zwei sich in Längsrichtung 6 erstreckenden Konsolenseitenwänden 7,7' und einem die Konsolenseitenwände 7,7' in einer Querrichtung 8 verbindenden Konsolenboden 9, wobei die Querrichtung 8 rechtwinklig zur Längsrichtung 6 verläuft. Der Konsolenboden 9 und die Konsolenseitenwände 7,7' bilden eine in Querrichtung 8 verlaufende U-förmige Querschnittsform. Die Konsolenseitenwände 7,7' stehen an den Freienden der Konsole 1 über den Konsolenboden 9 in Längsrichtung 6 gabelartig hinaus.

Am Befestigungsfreiende der Konsole 1 durchsetzt in Querrichtung 8 ein Schraubbolzen 10 die Konsolenseitenwände 7,7'. Der Schraubbbolzen 10 dient zur Befestigung des vorzugsweise als Schlaufe ausgeführten, in den Zeichnungen nicht dargestellten Zurrstrangfestendes. An dem dem Befestigungsfreiende abgewandten Wellenfreiende (28,28') der Konsole 1 durchsetzt in Querrichtung 8 die bolzenartigen Aufwickelwelle 4 in Lageraugen die Konsolenseitenwände 7,7'. Die Aufwickelwelle 4 besteht aus zwei Halbbolzen 11,11', die jeweils einen in Längsrichtung 6 verlaufenden, im wesentlichen halbkreisförmigen Querschnitt aufweisen. Durch diesen halbkreisförmigen Querschnitt entsteht an jedem Halbbolzen 11,11' eine sich in Querrichtung 8 erstreckende Planseite 12,12' sowie eine sich ebenfalls in Querrichtung 8 erstreckende Rundseite 13,13'. Die Halbbolzen 11,11' sind derart zur Aufwickelwelle 4 zusammengefügt, daß ihre Planseiten 12,12' einander zugewandt und ihre Rundseiten 13,13' gleichzeitig einander abgewandt sind. Die Planseiten 12,12' liegen hierbei nicht sich berührend aufeinander, sondern sind derart beabstandet zueinander angeordnet, daß zwischen ihnen ein Freiraum gebildet ist, der als Einführungsschlitz 14 dient.

In den Radius der Sperräder 3,3' ist jeweils eine Verzahnung 33 eingeformt. In ihrem Kern weisen die Sperräder 3,3' zwei im Querschnitt halbkreisförmige Aussparungen auf, deren plane Linien einander zugewandt sind und deren ausgerundete Linien einander abgewandt sind. Diese halbkreisförmigen Hohlquerschnitte entsprechen in ihrer Form und in ihren Abmessungen etwa den Volumenquerschnitten der Halbbolzen 11,11'. Die Halbbolzen 11,11' durchsetzen die Sperräder 3,3' in diesen Aussparungen nach Art einer Lospassung. Die Sperräder 3,3' sind auf der Aufwickelwelle 4 derart fixiert, daß sie die Außenseitenwände der Konsolenseitenwände 7,7' parallel flankieren.

Die Aufwickelwelle 4 durchsetzt gleichzeitig das gabelartige Lagerende des Spannhebels 2 derart, daß die Sperräder 3,3' zwischen den Außenseiten der Konsolenseitenwände 7,7' und den Innenseiten der Spannhebelseitenwänden 15,15' gelagert sind. Die Aufwickelwelle 4 ist gegen ein Verrutschen in Querrichtung 8 durch jeweils einen in Längsrichtung 6 sie durchsetzenden Sicherungsbolzen 43 an den Außenseiten der Spannhebelseitenwände 15,15' gesichert und verbindet gleichzeitig bewegungsmäßig die Konsole 1 mit dem Spannhebel 2.

An dem der Aufwickelwelle 4 gegenüberliegenden Griffende des Spannhebels 2 ist der die Spannhebelseitenwände 15,15' überbrückender Handgriff 16 befestigt. In Längsrichtung 6 ist etwa in der Mitte zwischen dem Handgriff 16 und der Aufwickelwelle 4 zwischen den Spannhebelseitenwänden 15,15' das in Querrichtung 8 verlaufende Querverbindungsjoch 17 fixiert. Das Querverbindungsjoch 17 ist in Richtung auf den Handgriff 16 vom Greifbügel 18 des Antriebsschiebers 19 durchsetzt. Der Antriebsschieber 19 erstreckt sich in einer durch die Aufwickelwelle 4 als einen Endpunkt und den Handgriff 16 als anderen Endpunkt definierten Griffrichtung 20. Aus dem Antriebsschieber 19 steht in Richtung auf den Handgriff 16, in Griffrichtung 20, ein Zentrierdorn 21 hervor. Der Zentrierdorn 21 ist von einem wendelförmigen Federelement, einer Spiralfeder 22, umgeben. Die Spiralfeder 22 bewegt mit ihrer Federkraft den Antriebsschieber 19 in Griffrichtung 20 auf die Aufwickelwelle 4 zu, wobei das Querverbindungsjoch 17 als Widerlager dient.

Der Antriebsschieber 19 durchsetzt die Spannhebelseitenwände 15,15' in Querrichtung 8 in den sich in Griffrichtung 20 erstreckenden Schieberführungsschlitzen 23,23' derart, daß der Antriebsschieber 19 in Griffrichtung 20 längsverschiebbar in den Spannhebelseitenwänden 15,15' gelagert ist. Der Antriebsschieber 19 bildet mit den Sperrädern 3,3' das Antriebsgesperre zum Drehantrieb der Aufwickelwelle 4 mittels des Spannhebels 2.

Aus dem Konsolenboden 9 ragt schwalbenschwanzartig senkrecht zur Längsrichtung 6 und zur Querrichtung 8 ein Führungsteil 24 hervor. In Längsrichtung 6 wird das Führungsteil 24 von zwei Lageröffnungen 25,25' durchsetzt. In der Lageröffnung 25 liegt ein etwa in Längsrichtung 6 verlaufender Dornfortsatz 26 des Sperrschiebers 5 ein; in der Lageröffnung 25' liegt ein etwa in Längsrichtung 6 verlaufender Dornfortsatz 26' des Sperrschiebers 5' ein.

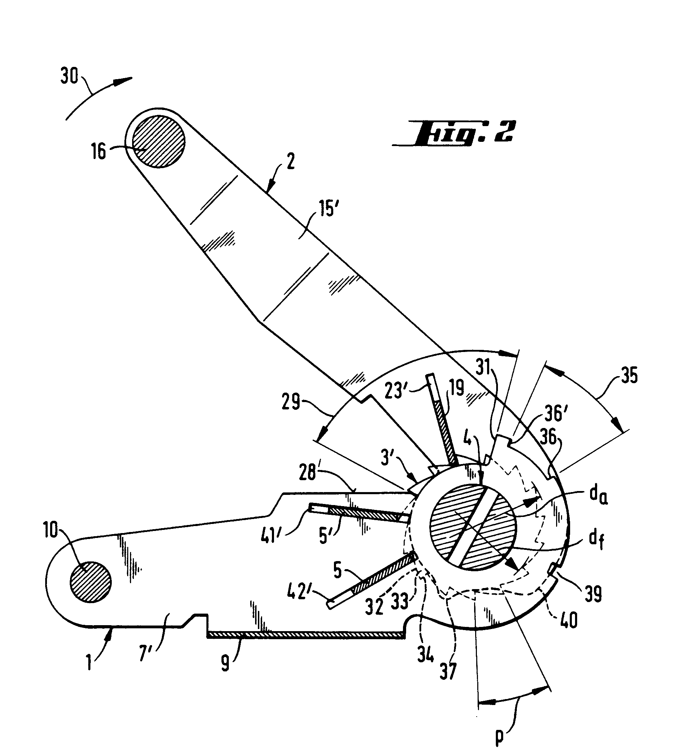

Die Sperrschieber 5,5' liegen nach Art zweier Schenkel eines spitzen Winkels, dessen Scheitelpunkt etwa deckungsgleich mit der Rotationsachse der Aufwickelwelle 4 ist, zueinander. 1hr Abstand entspricht dem Eineinhalbfachen der in Fig. 2 dargestellten Zahnteilung p. Die Sperrschieber 5,5' durchsetzen die Konsolenseitenwände 7,7' in Querrichtung 8 und sind in Längsrichtung 6 verschiebbar in Konsolführungsschlitzen 41,41'/42,42' gelagert. Die in Längsrichtung 6 verlaufenden Konsolführungsschlitze 41,41'/42,42' sind in die Konsolenseitenwände 7,7' eingeformt.

Zwischen dem Führungsteil 24 und jedem der beiden Sperrschieber 5,5' liegt jeweils ein Druckfederelement ein. Es ist dies beim Sperrschieber 5 das den Dornfortsatz 26 wendelförmig umgebende Spiralfederelement 27 und beim Sperrschieber 5' das den Dornfortsatz wendelförmig umgebende Spiralfederelement 27'. Das Führungsteil 24 dient den Spiralfederelementen 27,27' als Widerlager, um die Sperrschieber 5,5' mit ihrer Federkraft auf die Sperräder 3,3' hin zu bewegen.

Wie in Fig. 2 dargestellt, weist der Umfang des Wellenfreiendes 28,28' der Konsolenseitenwand 7,7' eine mehrfach gegliederte Form auf. Der in Querrichtung 8, im Bereich der Aufwickelwelle 4 verlaufende Querschnitt des Wellenfreiendeumfangs 28,28' ist im Bereich der Aufwickelwelle 4 von den Sperrschiebern 5,5' aus betrachtet zuerst derart kreisförmig gebogen, daß der Kreismittelpunkt mit dem Mittelpunkt der Sperräder 3,3' bzw. der Aufwickelwelle 4 zusammenfällt. Der Durchmesser dieses viertelkreisförmigen Sperrbereiches 29 am Wellenfreiendenumfang 28,28' weist einen dem Fußkreisdurchmesser (d_{f}) der Verzahnung 33 auf dem Sperrad 3,3' entsprechenden Teilkreisdurchmesser auf. Wird der Spannhebel 2 mit seinem Handgriff 16 von der Konsole 1 in einer Spannrichtung 30 wegbewegt, erreicht er gegenüber der Konsole 1 eine Stellung von etwa 80°, wobei der Antriebsschieber 19 am Ende des halbkreisförmigen Sperrbereiches 29 an einen Spannanschlag 31 anschlägt. Durch die Bewegung des Spannhebels 2 in Spannrichtung 30 wird die Aufwickelwelle 4 um etwa ein Viertel einer Umdrehung in Spannrichtung 30 weitergedreht. Schlägt der Antriebsschieber 19 an den Anschlag 31 an, muß der Spannhebel 2 gegen die Spannrichtung 30 in Richtung auf die Konsole 1 zurückbewegt werden. Hierbei gleitet der Antriebsschieber 19 über die gegen die Spannrichtung 30 abgerundeten Vorderflanken 32 der Zähne 33. Gleichzeitig hintergreift einer der beiden Sperrschieber 5,5' einen anderen Zahn 33 an seiner geradlinigen, im wesentlichen parallel zu den Radiallinien des Sperrades 3,3' verlaufenden Rückflanke 34. Wird das Sperrad 3,3' vom Antriebsschieber 19 angetrieben in Spannrichtung 30 weitergedreht, gleiten die Sperrschieber 5,5' ihrerseits über die abgerundeten Vorderflanken 32 der Zähne 33, wobei abwechselnd der Sperrschieber 5 und der Sperrschieber 5' nach einer der halben Zahnteilung p entsprechenden Umdrehung in Spannrichtung 30 einen Zahn 33 an seiner Rückflanke 34 hintergreifen. Zum Spannen wird mit dem Spannhebel 2 der Antriebsschieber 19 solange zwischen der Konsole 1 und dem Spannanschlag 31 hin- und herbewegt, bis die Aufwickelwelle 4 soviele Umdrehungen zurückgelegt hat, daß der in ihrem Einführungsschlitz 14 fixierte Zurrstrang mehrfach um sie gelegt aufgewickelt ist und so mit der notwendigen Zurrspannung beaufschlagt ist.

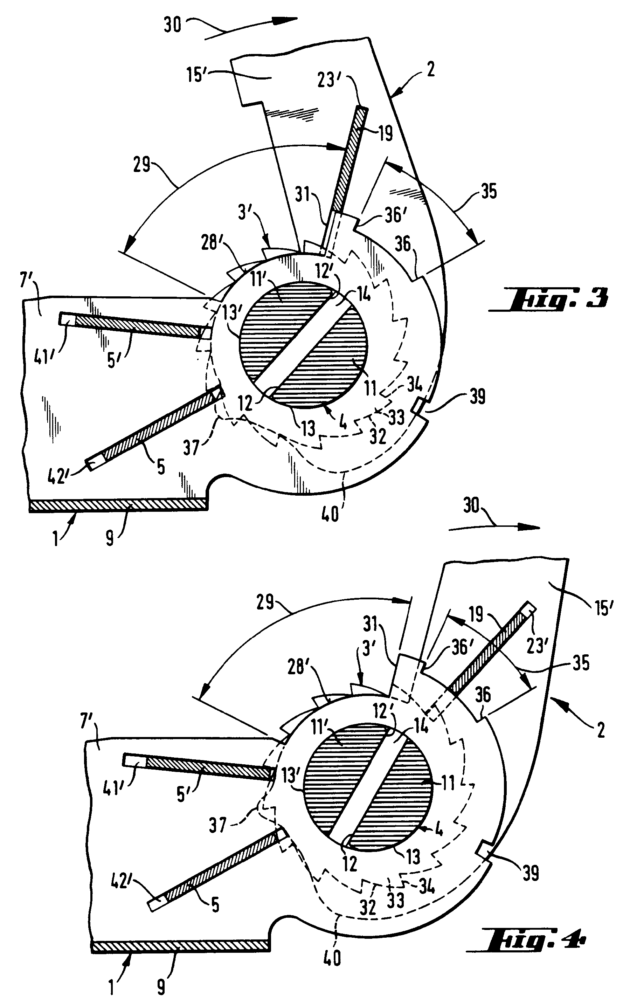

Zum iterativen Lösen des Gesperres wird der Antriebsschieber 19 mit dem Spannhebel 2 an den Spannanschlag 31 bewegt. Mit dem Greifbügel 18 wird der Antriebsschieber 19 in Griffrichtung 20 aus der Verzahnung in eine Position gezogen, in welcher er über den Spannanschlag 31 bewegbar ist. Der Umfang des Wellenfreiendes 28,28' weist neben dem Sperrbereich 29 in Spannrichtung 30 den benachbarten Lösebereich 35 auf. Wie in Fig. 3 dargestellt weist der Lösebereich 35 in Querrichtung 8 einen ausgerundeten, kreisförmigen Querschnitt auf, dessen Durchmesser größer ist als der Kopfkreisdurchmesser (da) des Sperrades 3,3'. Der Lösebereich 35 wird von Begrenzungsanschlägen 36,36' begrenzt.

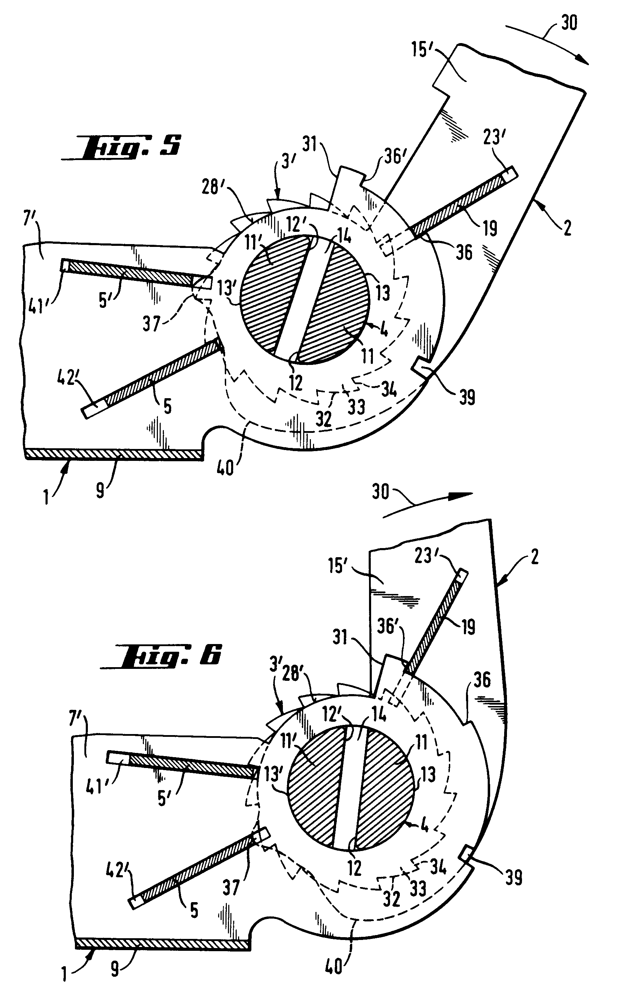

Der Spannhebel 2 wird nach dem Anheben des Antriebsschiebers 19 in Spannrichtung 30 weiterbewegt. Die Spiralfeder 22 drückt den Antriebsschieber 19, wie in Fig. 4 dargestellt, in den Lösebereich 35. Der Antriebsschieber 19 liegt mit seiner dem Greifbügel 18 abgewandten Stirnseite am Lösebereich 35 an und bildet mit dem Lösebereich 35 eine Gleitführung. Gleichzeitig kommt die am Umfang des Lagerendes des Spannhebels 2 angeformte, in Griffrichtung 20 aus dem Spannhebel 2 hervorstehende Entriegelungsnocke 37 mit den Sperrschiebern 5,5' in Berührung. Liegt der Antriebsschieber 19, wie Fig. 5 zeigt, am Begrenzungsanschlag 36 an, liegt die Entriegelungsnocke 37 an der Stirnseite des Sperrschiebers 5' derart an, daß dieser in Richtung auf das Führungsteil 24 bewegt ist und sich außer Eingriff mit den Zähnen 33 befindet. Gleichzeitig dreht sich die Aufwickelwelle 4 um eine einer halben Zahnteilung p entsprechende Drehstrecke gegen die Spannrichtung 30 zurück, bis der Sperrschieber 5 einen Zahn 33 an seiner Rückflanke 34 hintergreift.

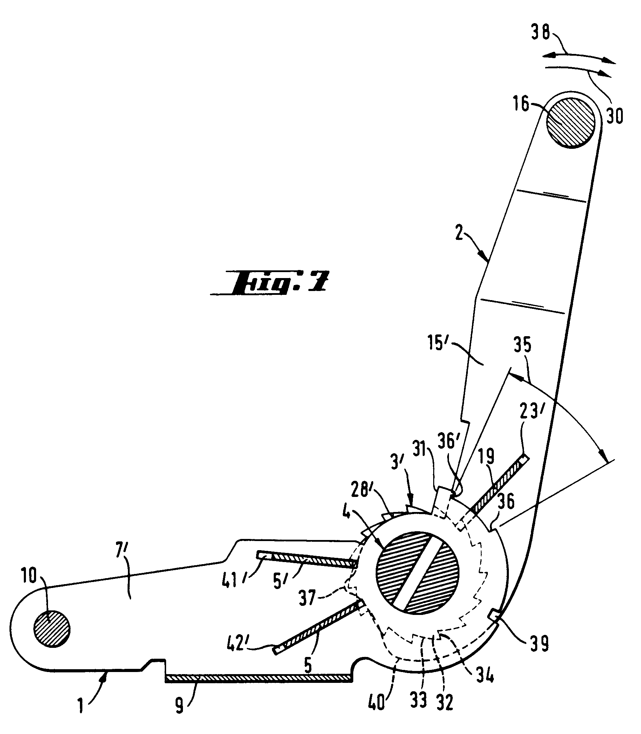

Bewegt man den Antriebsschieber 19 mit dem Spannhebel 2 gegen die Spannrichtung 30, wie in Fig. 6 dargestellt, zum zweiten Begrenzungsanschlag 36', liegt die Entriegelungsnocke 37 am anderen Sperrschieber 5 derart an, daß dieser mit dem Zahn 33 außer Eingriff kommt. Wiederum legt die Aufwickelwelle 4 von der Gurtspannung getrieben, eine einer halben Zahnteilung p entsprechende Umdrehung zurück bis der Sperrschieber 5' nun wieder einen Zahn 33 an seiner Rückflanke 34 hintergreift.

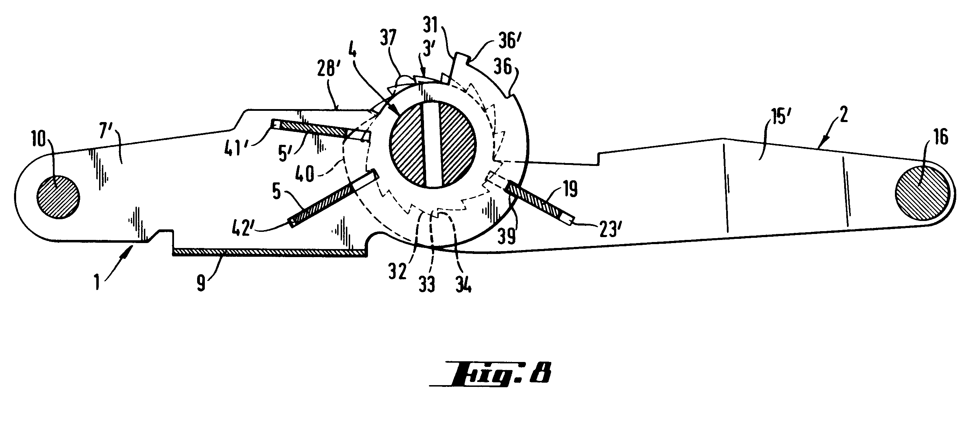

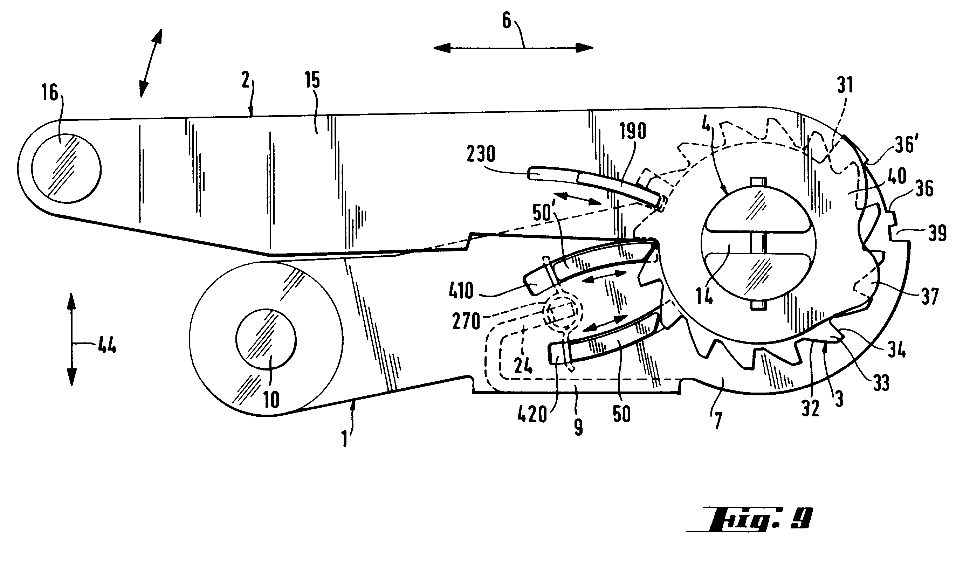

Wie durch den Doppelpfeil 38 in der Fig. 7 angedeutet, wird durch die Hin- und Herbewegung des Spannhebels 2 einmal gegen die Spannrichtung 30 und einmal in Spannrichtung 30 bei wechselndem Eingriff der Sperrschieber 5,5' in die Verzahnung 33 die Verzurrung schrittweise gelockert. Kann der Zurrstrang bedenkenlos vom Transportgut gelöst werden, wird der Antriebsschieber 19 mit seinem Greifbügel 18 wiederum in Richtung auf den Handgriff 16, in Griffrichtung 20, verfahren und der Spannhebel 2 in Spannrichtung 30 derart weitergedreht, daß die Konsole 1 und der Spannhebel 2 gemäß der Darstellung in Fig. 8 einen Öffnungswinkel von etwa 180° aufweisen. In die Stirnseite der Konsole 1 ist am Umfang des Wellenfreiendes 28,28' in Spannrichtung 30 neben dem Lösebereich 35 eine Rastnut 39 eingeformt. Der Antriebsschieber 19 rastet in dieser 180°- Öffnungsposition in die Rastnut 39 ein. Die Sperrschieber 5,5' werden in dieser Öffnungsposition von einer in Griffrichtung 20 an den Umfang des Lagerendes der Spannhebelseitenwände 15,15' angeformten Steuerkurve 40 derart in Richtung auf das Führungsteil 24 bewegt, daß beide Sperrschieber 5,5' sich mit den Zähnen 33 außer Eingriff befinden.

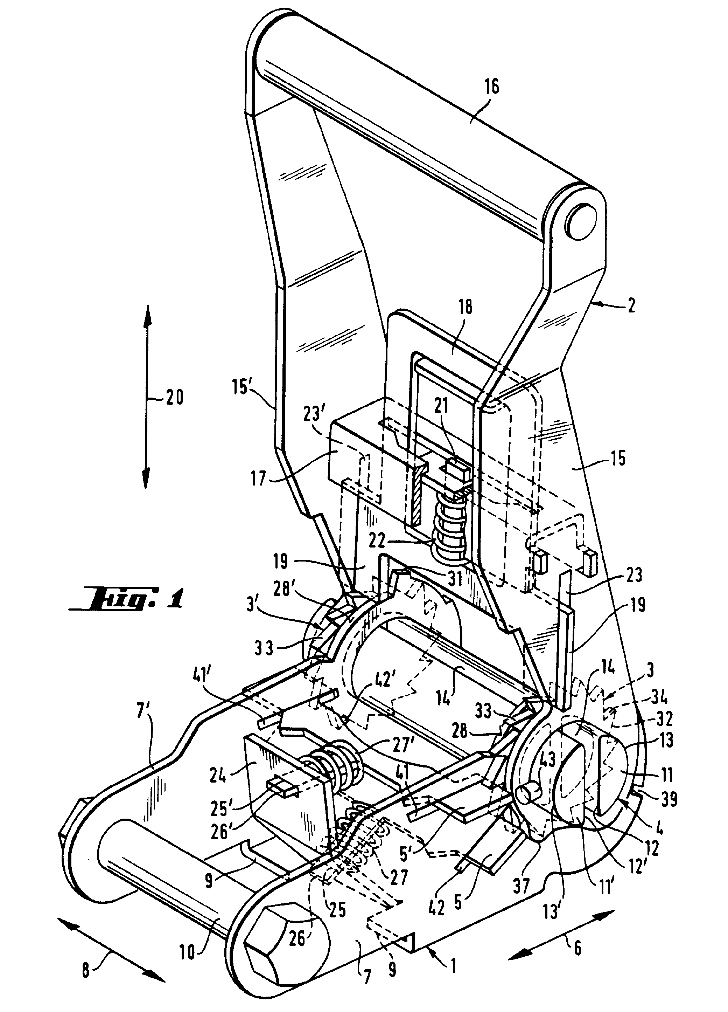

In den Fig. 1 bis 8 ist stets eine Ausführungsform der Ratsche mit einem Zahnteilungswinkel p von 24°, was einer Zähnezahl von 15 entspricht, dargestellt. Die Ratsche ist in einer weiteren, zeichnerisch nicht dargestellten Ausführungsform mit einem Zahnteilungswinkel p von 33°, was einer Zähnezahl von 11 entspricht, realisiert.

Prinzipiell ist auch jeder beliebige andere Zahnteilungswinkel p realisierbar. Bei einem großen Zahnteilungswinkel p weist die Entriegelungsnocke 37 eine geringe Steigung auf, wodurch nur geringe Kräfte zum Lösen der Sperrschieber 5,5' notwendig sind, gleichzeitig der Abstand der Sperrschieber 5,5' zueinander sich derart vergrößert, daß die gesamte Bauhöhe der Ratsche ansteigt.

Demgegenüber weist die Entriegelungsnocke 37 bei einem kleinen Zahnteilungswinkel p eine scharfe, hohe Steigung auf, wodurch vergleichsweise hohe Kräfte zum Lösen der Sperrschieber 5,5' notwendig sind, gleichzeitig der Abstand der Sperrschieber 5,5' zueinander sich aber derart verkleinert, daß die gesamte Ratsche sehr flach baut.

Bei der in Fig. 9 dargestellten Sonderausführungsform der Spannratsche sind die Sperrschieber 50,50' gekrümmt ausgeführt. Auch der Antriebsschieber 190 ist analog dem Sperrschieber 50' gekrümmt ausgeführt. Die gekrümmten Sperrschieber 50,50' sind in gekrümmten Konsolführungsschlitzen 410,420 gelagert. Auch der gekrümmte Antriebsschieber 190 ist im gekrümmten Schieberführungsschlitz 230 gelagert.

Die Sperrschieber 50,50' sind mit ihren dem Sperrad 3 abgewandten Stirnseiten an jeweils einem Schenkel der in Querrichtung 8 liegend angeordneten Schenkelfeder 270 anliegend widergelagert. Die Schenkelfeder 270 liegt hierbei platzsparend zwischen den Konkavseiten der gekrümmten Sperrschieber 50,50' ein.

Werden die Sperrschieber 50,50' in ihren ringsegmentförmig ausgestalteten Konsolführungsschlitzen 410,420 bewegt, führen die Sperrschieber 50,50' eine Schwenkbewegung aus, welche aus einem Bewegungsanteil in Längsrichtung 6 und einem Bewegungsanteil in Hochrichtung 44 besteht. Die Hochrichtung 44 verläuft senkrecht sowohl zur Längsrichtung 6 als auch zur Querrichtung 8. Die um ihre in der Zeichnungsebene der Fig. 9 in Querrichtung 8 verlaufenden Krümmungsachse gekrümmten Sperrschieber 50,50' vollziehen also eine aus einem Bewegungsanteil in Längsrichtung 6 und einem Bewegungsanteil in Hochrichtung 44 resultierende Schwenkbewegung. Die Schwenkbewegung der gekrümmten Sperrschieber 50,50' vollzieht sich etwa um die Schenkelfeder 270 teilrotierend. Die Kinematik des gekrümmten Antriebsschiebers 190 im gekrümmten Schieberführungsschlitz 230 verläuft analog zur Bewegung der gekrümmten Sperrschieber 50,50'. Mit dieser Sonderausführungsform ist folglich eine Ratsche mit großer Zahnteilung p und einer Entriegelungsnocke 37 mit geringer Steigung realisierbar, ohne daß diese Ratsche zu hoch baut.

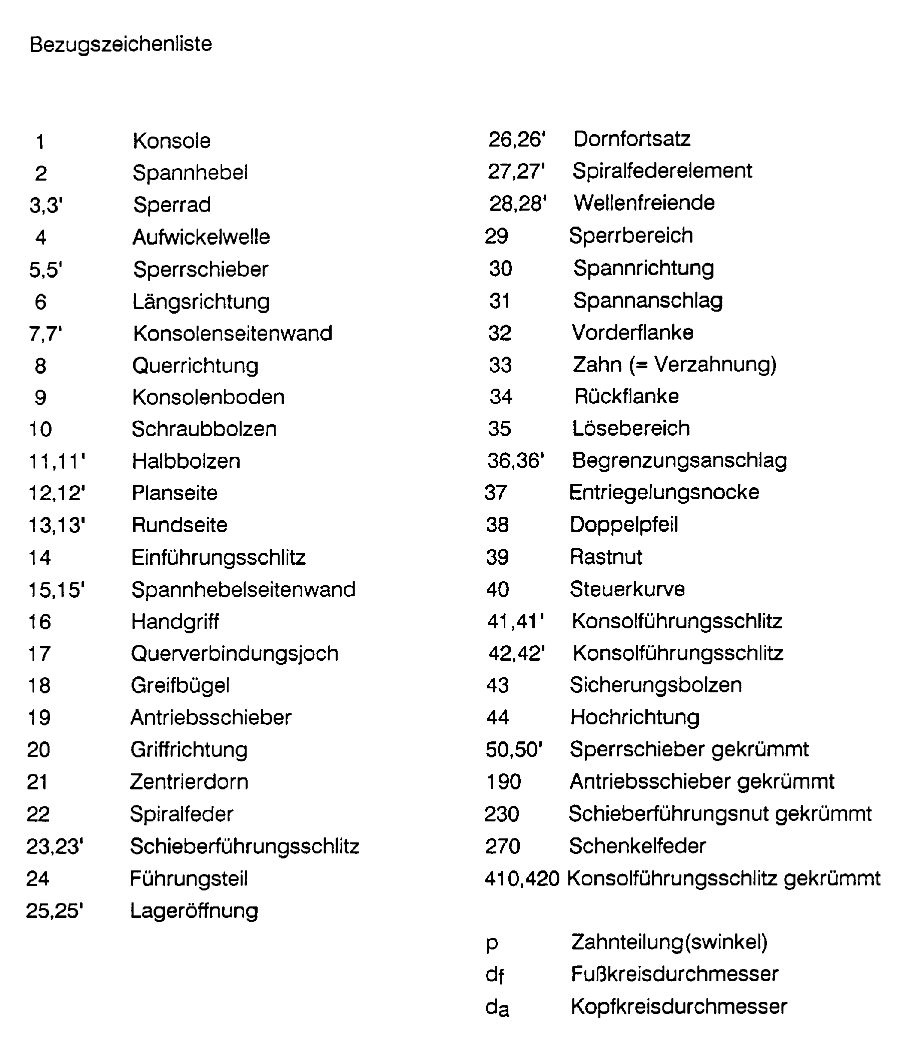

## Patentansprüche

1. Spannratsche für einen Zurrstrang mit
- einer an einer Konsole (1) drehbar gelagerten Aufwickelwelle (4) für den Zurrstrang,
- mit einem auf der Aufwickelwelle (4) schwenkbar gelagerten Spannhebel (2) als Drehantrieb,
- mit einem lösbaren Zahnrichtgesperre für die Drehantriebsübertragung zwischen Spannhebel (2) und Aufwickelwelle (4) und
- mit einem ebenfalls lösbaren Zahnrichtgesperre zwischen Konsole (1) und Aufwickelwelle (4) als Sicherung gegen Rückdrehung beim Spannen.
a) Die Aufwickelwelle (4) enthält ein mit ihr drehbares Sperrad (3,3') für die Zahnrichtgesperre.
b) Der Spannhebel (2) lagert einen unter Rückstelldruck mit dem Sperrad (3,3') in Eingriff bringbaren Antriebsschieber (19).
c) Die Konsole (1) lagert in Umfangsrichtung versetzt zwei unter Rückstelldruck mit dem Sperrad (3,3') in Eingriff bringbare Sperrschieber (5,5').
d) Der Spannhebel (2) trägt am Umfang seines Lagerendes eine zum gemeinsamen Ausrücken der Sperrschieber (5,5') dienende Steuerkurve (40), die bei ausgerücktem Antriebsschieber (19) durch Spannhebelschwenkung in Spannrichtung (30) die Sperrschieber (5,5') beaufschlagt.
Gekennzeichnet durch folgende Merkmale:
e) Die Sperrschieber (5,5') sind mit in Drehrichtung wirksamem Abstand zueinander in separaten Konsolführungen (41,41',42,42') verschiebbar.
f) Der Steuerkurve (40) in Umfangsrichtung benachbart ist eine Entriegelungsnocke (37) zum selektiven Ausrücken jeweils eines der beiden Sperrschieber (5,5') angeordnet.

2. Ratsche nach Anspruch 1,
dadurch gekennzeichnet,
daß die Entriegelungsnocke (37) der Steuerkurve (40) in Spannrichtung (30) vorauseilend benachbart am Umfang des Spannhebellagerendes angeordnet ist.

3. Ratsche nach Anspruch 1 oder 2,
dadurch gekennzeichnet,
daß die Spannhebelseitenwände (15,15') im wesentlichen parallel verlaufen und an den Spannhebelfreienden gabelartig aus dem Spannhebel (2) vorstehen, wobei an dem dem Lagerende abgewandten Griffende ein die Spannhebelseitenwände (15,15') parallel zur Aufwickelwelle (4) in Querrichtung (8) überbrückender Handgriff (16) fixiert ist.

4. Ratsche nach einem oder mehreren der Ansprüche 1-3,
dadurch gekennzeichnet,
daß im Bereich zwischen zwischen Lagerende und Griffende ein
- hohlkastenartiges,
- in Querrichtung (8) verlaufendes und
- in Richtung auf die Aufwickelwelle (4) offenes
Querverbindungsjoch (17) die Spannhebelseitenwände (15,15') überbrückend miteinander verbindet.

5. Ratsche nach Anspruch 4,
dadurch gekennzeichnet,
daß der Antriebsschieber (19) in Schieberführungsschlitzen (23,23') in den Spannhebelseitenwände (15,15') gegen das Querverbindungsjoch (17) federdruckbeaufschlagt und längverfahrbar gelagert einliegt und seine der Aufwickelwelle (4) abgewandte Antriebsschieberstirnseite einen Greifbügel (18) zum Längsverfahren in Richtung auf das Querverbindungsjoch (17) trägt.

6. Ratsche nach einem oder mehreren der vorhergehenden Ansprüche,
dadurch gekennzeichnet,
daß die einander abgewandten Freienden der Konsole (1) gabelförmig ausgebildet sind und die Konsole zwischen den Freienden in Querrichtung (8) einen etwa U-förmigen Querschnitt aufweist,
- dessen U-Schenkel die in Längsrichtung (6) im wesentlichen parallel angeordneten Konsolenseitenwände (7,7') bilden und
- dessen U-Joch der Konsolenboden (9) ist.

7. Ratsche nach Anspruch 6,
dadurch gekennzeichnet,
daß ein Schraubbolzen (10) die Konsolenseitenwände (7,7') am Befestigungsfreiende der Konsole (1) zur Befestigung des vorzugsweise als Gurtschlaufe ausgebildeten Zurrstrangfestendes in Querrichtung (8) überbrückend durchsetzt und die Aufwickelwelle (4) an dem dem Befestigungsfreiende abgewandten Wellenfreiende (28,28') in Lageraugen der Konsolenseitenwände (7,7') gelagert ist.

8. Ratsche nach einem oder mehreren der vorhergehenden Ansprüche,
dadurch gekennzeichnet,
daß zwei Sperräder (3,3') auf der Aufwickelwelle (4) zwischen den Außenseiten der Konsolenseitenwände (7,7') und den Innenseiten der Spannhebelseitenwände (15,15') einliegen und formschlüssig mit der Aufwickelwelle (4) verbunden sind.

9. Ratsche nach einem oder mehreren der vorhergehenden Ansprüche,
gekennzeichnet durch,
einen zu ihrer in Längsrichtung (6) verlaufenden Mittellängsachse achsensymmetrischen Aufbau derart, daß die Aufwickelwelle (4) zwei Sperräder (3,3') trägt, zwei Konsolenseitenwände und entsprechend zwei Spannhebelseitenwände (15,15') vorhanden sind.

10. Ratsche nach einem oder mehreren der vorhergehenden Ansprüche,
dadurch gekennzeichnet,
daß der Spannhebel (2) in seiner Ruheposition nach Art eines Deckels auf der Konsole (1) ruht und zum Drehantrieb der Aufwickelwelle (4) in Spannrichtung (30) in eine 80°-Position zur Konsole (1) schwenkbar ist, wobei der Antriebsschieber (19) mit seiner Stirnfläche einen Sperrzahn (33) eines Sperrades (5,5') formschlüssig hintergreift.

11. Ratsche nach Anspruch 10,
dadurch gekennzeichnet,
daß der Antriebsschieber (19) in der 80°-Position des Spannhebels (2) in die Verzahnung (33) eingreifend an einem radial aus dem Umfang des Wellenfreiendes (28,28') hinausstehenden Spannanschlag (31) anliegt.

12. Ratsche nach Anspruch 11,
dadurch gekennzeichnet,
daß der Antriebsschieber (19) zur Weiterschwenkbarkeit des Spannhebels (2) in Spannrichtung (30) über die 80°-Position hinaus durch Längsverschiebung in Richtung auf den Spannhebelhandgriff (16) aus der Verzahnung (33) hebbar ist und in dieser Außereingriffstellung seine Anlage gegen den Spannanschlag (31) aufhebbar ist.

13. Ratsche nach Anspruch 12,
dadurch gekennzeichnet,
daß der dem Spannanschlag (31) an der Konsole (1) in Spannrichtung (30) benachbarte Bereich des Wellenfreiendenumfangs (28,28') den Kopfkreisdurchmesser (dₐ) des benachbarten Sperrades (3,3') radial übersteht und derart konvex ausgerundet ist, daß er eine Gleitführung für die dem Sperrad (3,3') zugewandte Antriebsschieberstirnseite bildet.

14. Ratsche nach Anspruch 13,
gekennzeichnet durch
eine Inaktivstellung des Antriebsschiebers (19) mit an der Gleitführung anliegender Antriebsschieberstirnseite bei gleichzeitiger Außereingriffstellung mit der Verzahnung (33).

15. Ratsche nach einem der Ansprüche 12 bis 14,
dadurch gekennzeichnet,
daß die Gleitführung einen in Spannrichtung (30) von zwei radial aus dem Wellenfreiendenumfang (28,28') hinausstehenden Begrenzungsanschlägen (36,36') eingefaßten Lösebereich (35) bildet.

16. Ratsche nach einem oder mehreren der vorhergehenden Ansprüche,
dadurch gekennzeichnet,
daß die Sperrschieber (5,5') in einem Abstand von eineinhalb Zahnteilungen (p) zueinander in die auf dem Sperrad (3,3') angeordnete Verzahnung (33) eingreifen.

17. Ratsche nach Anspruch 16,
dadurch gekennzeichnet,
daß die Sperrschieber (5,5') wie die Schenkel eines spitzen Winkels, dessen Scheitelpunkt etwa auf der in Querrichtung (8) verlaufenden Rotationsachse der Aufwickelwelle (4) liegt, zueinander ausgerichtet in Konsolführungsschlitzen (41,41'/42,42') an der Konsole längsverschiebbar gelagert sind.

18. Ratsche nach Anspruch 15,16 und 17,
gekennzeichnet durch
eine erste Lösestellung des Spannhebels (2) und des zwischen Konsole (1) und Aufwickelwelle (4) wirksamen Gesperres derart, daß der Antriebsschieber (19) am Begrenzungsanschlag (36') anliegt und die Entriegelungsnocke (37) den einen Sperrschieber (5) außer Eingriff mit der Verzahnung (33) hält.

19. Ratsche nach Anspruch 15,16 und 17,
gekennzeichnet durch
eine zweite Lösestellung des Spannhebels (2) und des zwischen Konsole (1) und Aufwickelwelle (4) wirksamen Gesperres derart, daß der Antriebsschieber (19) am Begrenzungsanschlag (36) anliegt und die Entriegelungsnocke (37) den anderen Sperrschieber (5') außer Eingriff mit der Verzahnung (33) hält.

20. Ratsche nach Anspruch 18 und 19,
gekennzeichnet durch
eine schrittweise Entspannbarkeit des Zurrstranges durch abwechselndes Hin- und Herbewegen des Spannhebels (2) zwischen der ersten und der zweiten Lösestellung.

21. Ratsche nach Anspruch 16 und 17,
dadurch gekennzeichnet,
daß einer der Sperrschieber (50,50') um eine in Querrichtung (8) verlaufende Krümmungsachse gekrümmt ist.

22. Ratsche nach Anspruch 21,
dadurch gekennzeichnet,
daß die Sperrschieber (50,50') und der Antriebsschieber (190) ringsegmentförmig gekrümmt sind und in entsprechend ringsegmentförmigen Führungsschlitzen (230,410,420) geführt sind.

23. Ratsche nach Anspruch 22,
dadurch gekennzeichnet,
daß die Konkavseiten der Sperrschieber (50,50') einander zugewandt sind und eine zwischen ihnen liegende Schenkelfeder (270) derart fixierbar ist, daß jeweils ein Sperrschieber (50,50') zur Druckbeaufschlagung an einem Federschenkel anliegt.

## Claims

1. A tensioning ratchet for a lashing strap with
- a winding-up spindle (4) for the lashing strap, mounted for rotation on a frame (1),
- with a tensioning lever (2) pivotably mounted on the winding-up spindle (4) as the rotational drive,
- with a releasable directional tooth locking mechanism between the tensioning lever (2) and the winding-up spindle (4) and
- a directional tooth locking mechanism that is also releasable, between the frame (1) and the winding-up spindle (4) as a means preventing any reverse rotation during the tensioning.
a) The winding-up spindle (4) contains a ratchet wheel (3, 3') rotatable therewith for the directional tooth locking mechanism.
b) The tensioning lever (2) supports a driving pawl (19) that can be brought with restoring pressure into engagement with the ratchet wheel (3, 3').
c) The frame (1) supports, offset in the circumferential direction, two pawls (5, 5') that can be brought into engagement with restoring pressure with the ratchet wheel (3, 3').
d) On the circumference of its bearing end, the tensioning lever (2) carries an actuating cam (40) serving for the joint disengagement of the locking pawls (5, 5') which, when the driving pawl (19) is disengaged, acts on the locking pawls (5, 5') by pivoting the tensioning lever in the tensioning direction (30),
characterized by the following features:
e) The locking pawls (5, 5') are displaceable in separate frame guides (41, 41', 42, 42') at a mutual interspacing effective in the direction of rotation.
f) An unlatching cam (37) for the selective disengagement of one of the two locking pawls (5, 5') at a time is arranged to adjoin the actuating cam (40) in the circumferential direction.

2. A ratchet according to claim 1,
characterized in that
the unlatching cam (37) is arranged to precede the actuating cam (40) in the tensioning direction (30) in the vicinity of the circumference of the bearing end of the tensioning lever.

3. A ratchet according to claim 1 or 3,
characterized in that
the side walls (15, 15') of the tensioning lever extend substantially parallel and project at the free ends of the tensioning lever from the said tensioning lever (2) in the manner of a fork, in which arrangement a handle (16) bridging the side walls (15, 15') of the tensioning lever in the transverse direction (8) parallel to the winding-up spindle (4) is mounted at the handle end that is remote from the bearing end.

4. A ratchet according to one or more of claims 1 to 3,
characterized in that
in the zone between the bearing end and handle end, a transverse connecting yoke (17) which
- is of a hollow box type,
- extends in the transverse direction (8) and
- is open towards the winding-up spindle (4), interconnects the side walls (15, 15') in a bridging manner.

5. A ratchet according to claim 4,
characterized in that
the driving pawl (19) lies in slider guide slots (23, 23') in the side walls (15, 15') being spring-loaded against the transverse connecting yoke (17) and mounted for displacement in the longitudinal direction, and that its front pawl side remote from the winding-up spindle (4) carries a gripping bar (18) for longitudinal displacement in the direction towards the transverse connecting yoke (17).

6. A ratchet according to one or more of the preceding claims,
characterized in that
the free ends of the frame (1) facing away from each other have a fork-shaped design and that the frame has between the free ends in the transverse direction (8) an approximately U-shaped cross-section,
- whose U sides form the frame side walls (7, 7') which are arranged substantially parallel in the longitudinal direction (6) and
- whose U web forms the frame bottom (9).

7. A ratchet according to claim 6,
characterized in that
at the free mounting end of the frame (1), a screw bolt (10) passes in a bridging manner in the transverse direction (8) through the frame side walls (7, 7') so as to secure the fixed end of the tension strap, preferably formed as a strap loop, and that the winding-up spindle (4) is mounted in mounting eyes of the frame side walls (7, 7') at the free spindle end (28, 28') which is remote from the free mounting end.

8. A ratchet according to one or more of the preceding claims,
characterized in that
two ratchet wheels (3, 3') lie on the winding-up spindle (4) between the outer sides of the frame side walls (7, 7') and the inner sides of the side walls (15, 15') of the tensioning lever, and are connected to the winding-up spindle (4) in a form-locking manner.

9. A ratchet according to one or more of the preceding claims,
characterized by
an axial symmetrical construction with respect to its longitudinal median axis, extending in the longitudinal direction (6) in such a way that the winding-up spindle (4) carries two ratchet wheels (3, 3'), two frame side walls, and that accordingly two side walls (15, 15') of the tensioning lever (2) are to hand.

10. A ratchet according to one or more of the preceding claims,
characterized in that
in its rest position, the tensioning lever (2) rests in the manner of a lid on the frame (1), and for providing the rotational drive for the winding-up spindle (4), it is pivotable in the tensioning direction (30) into an 80° position relative to the frame (1), in which action the driving pawl (19) engages with its front face behind a locking tooth (33) of a locking pawl (5, 5') in a form-locking manner.

11. A ratchet according to claim 10,
characterized in that
in the 80° position of the tensioning lever (2), the driving pawl (19) bears, while engaging in the tooth system (33), on a tensioning stop (31) that projects radially from the circumference of the free spindle end (28, 28').

12. A ratchet according to claim 11,
characterized in that
to allow the tensioning lever (2) to pivot further in the tensioning direction (30) beyond the 80° position, the driving pawl (19) can be lifted out of the tooth system (33) by longitudinal displacement in the direction towards the tensioning lever handle (16), and that in this disengagement position its bearing against the tension stop (31) can be cancelled.

13. A ratchet according to claim 12,
characterized in that
the circumference zone of the free spindle ends (28, 28') adjoining the tensioning stop (31) on the frame (1) in the tensioning direction (30) radially projects over the head circle diameter (dₐ) of the adjoining ratchet wheel (3, 3') and is rounded off in a convex shape in such a way that it forms a sliding guide for the front side of the driving pawl facing the ratchet wheel (3, 3').

14. A ratchet according to claim 13,
characterized by
an inoperative position of the driving pawl (19), with the front face of the driving pawl bearing on the sliding guide and with a position of disengagement from the tooth system (33) at the same time.

15. A ratchet according to one of claims 12 to 14,
characterized in that
the sliding guide forms a release zone (35) surrounded in the tensioning direction (30) by two limiting stops (36, 36') that radially project from the circumference of the free spindle ends (28, 28').

16. A ratchet according to one or more of the preceding claims,
characterized in that
the locking pawls (5, 5') engage in the tooth system (33) arranged on the ratchet wheel (3, 3') at a mutual interspacing of one and a half tooth pitches (p).

17. A ratchet according to claim 16,
characterized in that
the locking pawls (5, 5'), which are orientated with respect to each other like the sides of an acute angle whose vertex lies approximately on the axis of rotation extending in the transverse direction (8) of the winding-up spindle (4), are mounted in guide slots (41, 41'/42, 42') for longitudinal displacement on the frame.

18. A ratchet according to claims 15, 16, and 17,
characterized by
a first release position of the tensioning lever (2) and of the locking mechanism operating between the frame (1) and the winding-up spindle (4) in such a way that the driving pawl (19) bears on the limiting stop (36') and the unlatching cam (37) holds one locking pawl (5) out of engagement with the tooth system (33).

19. A ratchet according to claims 15, 16, and 17,
characterized by
a second release position of the tensioning lever (2) and of the locking mechanism operating between the frame (1) and the winding-up spindle (4) in such a way that the driving pawl (19) bears on the limiting stop (36) and the unlatching cam (37) holds the other locking pawl (5') out of engagement with the tooth system (33).

20. A ratchet according to claim 18 and 19,
characterized by
a facility for the stepwise release of the tensioning strap by an alternating to and fro movement of the tensioning lever (2) between the first and second release position.

21. A ratchet according to claim 16 and 17,
characterized in that
one of the locking pawls (50, 50') is curved round an axis of curvature extending in the transverse direction (8).

22. A ratchet according to claim 21,
characterized in that
the locking pawls (50, 50') and the driving pawl (190) are curved in a ring segment shape and are guided in corresponding ring segment-shaped guide slots (230, 410, 420).

23. A ratchet according to claim 22,
characterized in that
the concave sides of the locking pawls (50, 50') face each other and that a leg spring (270) lying between them can be fixed in such a way that for the thrust loading, one locking pawl (5, 5') each bears on one leg of the spring.

## Revendications

1. Dispositif de tension à cliquets pour lien d'arrimage, comprenant
- un arbre d'enroulement (4) pour le lien d'arrimage, monté rotatif sur une console (1),
- un levier de tensionnement (2) monté en rotation sur l'arbre d'enroulement (4) et formant un entraînement en rotation,
- un dispositif de blocage unidirectionnel libérable à denture pour la transmission de l'entraînement en rotation entre le levier de tensionnement (2) et l'arbre d'enroulement (4), et
- un dispositif de blocage unidirectionnel également libérable et à denture entre la console (1) et l'arbre d'enroulement (4) en tant que sécurité contre une rotation inverse lors du tensionnement, dans lequel
a) l'arbre de roulement (4) contient une roue de blocage (3, 3') mise en rotation avec lui pour le bloqueur unidirectionnel à denture,
b) le levier de tensionnement (2) reçoit un loquet d'entraînement (19) qui peut être amené sous une force de rappel en engagement avec la roue de blocage (3, 3'),
c) la console (1) reçoit deux loquets de blocage (5, 5') décalés en direction périphérique, qui peuvent être amenés sous une force de rappel en engagement avec la roue de blocage (3, 3'),
d) le levier de tensionnement (2) porte à la périphérie de son extrémité de montage un profil de commande (40) qui sert à repousser ensemble les loquets de blocage (5, 5'), ce profil de commande sollicitant les loquets de blocage (5, 5') par pivotement du levier de tensionnement dans la direction de tensionnement (30) lorsque le loquet d'entraînement (19) est reculé, caractérisé par les éléments suivants :
e) les loquets de blocage (5, 5') peuvent être déplacés dans des guidages séparés (41, 41', 42, 42') de la console, à une distance effective l'un de l'autre dans la direction de rotation,
f) une came de déverrouillage (37) est agencée au voisinage du profil de commande (40) dans la direction périphérique pour reculer de manière sélective un des deux loquets de blocage (5, 5') respectifs.

2. Dispositif tendeur selon la revendication 1, caractérisé en ce que la came de déverrouillage (37) est agencée au voisinage du profil de commande (40) et en avance dans la direction de tensionnement (30), à la périphérie de l'extrémité de montage du levier de tensionnement.

3. Dispositif tendeur selon l'une ou l'autre des revendications 1 et 2, caractérisé en ce que les parois latérales du levier de tensionnement (15, 15') s'étendent sensiblement parallèlement et dépassent du levier de tensionnement (2) à la manière d'une fourche au niveau des extrémités libres du levier de tensionnement, une poignée (16), qui forme un pontage entre les parois latérales (15, 15') du levier de tensionnement, parallèlement à l'arbre d'enroulement (4) et en direction transversale (8), étant fixée à l'extrémité éloignée de l'extrémité de montage.

4. Dispositif tendeur selon l'une ou plusieurs des revendications 1 à 3, caractérisé en ce qu'une barre de liaison transversale (17)
- en forme de caisson creux,
- s'étendant en direction transversale (8),
- ouverte en direction de l'arbre d'enroulement (4), relie l'une à l'autre à la manière d'un pont les parois latérales (15, 15') du levier de tensionnement dans la région entre l'extrémité de montage et l'extrémité de la poignée.

5. Dispositif tendeur selon la revendication 4, caractérisé en ce que le loquet d'entraînement (19) est monté en translation et sollicité par un ressort contre la barre de liaison transversale (17) dans des fentes de guidage (23, 23') dans les parois latérales (15, 15') du levier de tensionnement, et en ce que son extrémité éloignée de l'arbre d'enroulement (4) porte un arceau de saisie (18) destiné au déplacement longitudinal en direction de la barre de liaison transversale (17).

6. Dispositif tendeur selon l'une ou plusieurs des revendications précédentes, caractérisé en ce que les extrémités libres de la console (1) opposées l'une à l'autre sont réalisées en forme de fourche, et en ce que la console présente entre les extrémités libres et en direction transversale (8) une section transversale approximativement en forme de U,
- dont les bras du U forment les parois latérales (7, 7') de la console agencées sensiblement parallèlement dans la direction longitudinale (6), et
- dont le fond du U est le fond de la console (9).

7. Dispositif tendeur selon la revendication 6, caractérisé en ce qu'un boulon vissé (10) traverse les parois latérales (7, 7') de la console en direction transversale (8) et en formant un pont, à l'extrémité libre de fixation de la console (1), pour la fixation de l'extrémité fixe du lien d'arrimage, réalisée de préférence sous la forme d'une boucle, et en ce que l'arbre d'enroulement (4) est monté à l'extrémité libre d'arbre (28, 28') éloignée de l'extrémité libre de fixation, dans des lumières de montage des parois latérales (7, 7') de la console.

8. Dispositif tendeur selon l'une ou plusieurs des revendications précédentes, caractérisé en ce que deux roues de blocage (3, 3') sont disposées sur l'arbre d'enroulement (4) entre les côtés extérieurs des parois latérales (7, 7') de la console et les côtés intérieurs des parois latérales (15, 15') du levier de tensionnement, et sont raccordées en coopération de formes avec l'arbre d'enroulement (4).

9. Dispositif tendeur selon l'une ou plusieurs des revendications précédentes, caractérisé par une structure symétrique par rapport à son axe longitudinal médian qui s'étend dans la direction longitudinale (6), de telle manière que l'arbre d'enroulement (4) porte deux roues de blocage (3, 3'), et par le fait que deux parois latérales de console et de façon correspondante deux parois latérales (15, 15') de levier de tensionnement sont prévues.

10. Dispositif tendeur selon l'une ou plusieurs des revendications précédentes, caractérisé en ce que le levier de tensionnement (2) est posé dans sa position de repos à la manière d'un couvercle sur la console (1), et qu'il peut être pivoté pour l'entraînement en rotation de l'arbre d'enroulement (4) dans la direction de tensionnement (30) dans une position à 80° de la console (1), le loquet d'entraînement (19) s'engageant en coopération de formes par sa face frontale en arrière d'une dent de blocage (33) d'une roue de blocage (5, 5').

11. Dispositif tendeur selon la revendication 10, caractérisé en ce que dans la position à 80° du levier de tensionnement (2) le loquet d'entraînement (19) engagé dans la denture (33) est appliqué contre une butée de tensionnement (31) qui dépasse radialement à la périphérie de l'extrémité libre d'arbre (28, 28').

12. Dispositif tendeur selon la revendication 11, caractérisé en ce que dans le but de permettre la poursuite de la rotation du levier de tensionnement (2) dans la direction de tensionnement (30) au-delà de la position à 80°, le loquet d'entraînement (19) peut être soulevé par déplacement longitudinal dans la direction de la poignée (16) hors de la denture (33), et que son appui contre la butée de tensionnement (31) peut être annulé dans cette position de dégagement.

13. Dispositif tendeur selon la revendication 12, caractérisé en ce que la région de la périphérie de l'extrémité libre (28, 28') voisine de la butée de tensionnement (31) dans la direction de tensionnement (30) sur la console (1) dépasse radialement le diamètre extérieur (dₐ) de la roue de blocage voisine (3, 3'), et est arrondie de manière convexe de telle manière qu'elle forme un guidage coulissant pour l'extrémité du loquet d'entraînement dirigée vers la roue de blocage (3, 3').

14. Dispositif tendeur selon la revendication 13, caractérisé par une position inactive du loquet d'entraînement (19) lorsque l'extrémité du loquet d'entraînement est en contact contre le guidage coulissant tandis qu'elle est simultanément dégagée de la denture (33).

15. Dispositif tendeur selon l'une des revendications 12 à 14, caractérisé en ce que le guidage coulissant forme une région de libération (35) constituée dans la direction de tensionnement (30) par deux butées de délimitation (36, 36') qui dépassent radialement hors de la périphérie de l'extrémité libre (28, 28').

16. Dispositif tendeur selon l'une ou plusieurs des revendications précédentes, caractérisé en ce que les loquets de blocage (5, 5') s'engagent dans la denture (33) ménagée sur la roue de blocage (3, 3') à une distance l'un de l'autre égale à un pas et demi (p) de la denture.

17. Dispositif tendeur selon la revendication 16, caractérisé en ce que les loquets de blocage (5, 5') sont montés de manière à pouvoir se déplacer longitudinalement sur la console, dans des fentes de guidage (41, 41'/42, 42') de la console, en étant dirigés l'un par rapport à l'autre à la manière des côtés d'un angle aigu dont le sommet est situé approximativement sur l'axe de rotation de l'arbre d'enroulement (4) qui s'étend dans la direction transversale (8).

18. Dispositif tendeur selon l'une des revendications 15, 16 ou 17, caractérisé par une première position de libération du levier de tensionnement (2) et du dispositif à encliquetage agissant entre la console (1) et l'arbre d'enroulement (4), de telle manière que le loquet d'entraînement (19) est appliqué contre la butée de délimitation (36') et la came de déverrouillage (37) maintient l'un des loquets de blocage (5) dégagé par rapport à la denture (33).

19. Dispositif tendeur selon l'une des revendications 15, 16 ou 17, caractérisé par une seconde position de libération du levier de tensionnement (2) et du dispositif à encliquetage agissant entre la console (1) et l'arbre d'enroulement (4), de telle manière que le loquet d'entraînement (19) est appliqué contre la butée de délimitation (36), et la came de déverrouillage (37) maintient l'autre loquet de blocage (5') dégagé par rapport à la denture (33).

20. Dispositif tendeur selon les revendications 18 et 19, caractérisé par la capacité de détendre pas à pas le lien d'arrimage par déplacement en va-et-vient alternatif du levier de tensionnement (2) entre la première et la seconde position de libération.

21. Dispositif tendeur selon les revendications 16 et 17, caractérisé en ce que l'un des loquets de blocage (50, 50') est incurvé autour d'un axe de courbure qui s'étend dans la direction transversale (8).

22. Dispositif tendeur selon la revendication 21, caractérisé en ce que les loquets de blocage (50, 50') et le loquet d'entraînement (190) sont incurvés en forme de segment de cercle et sont guidés dans des fentes de guidage (230, 410, 420) correspondantes en forme de segments de cercle.

23. Dispositif tendeur selon la revendication 22, caractérisé en ce que les côtés concaves des loquets de blocage (50, 50') sont dirigés l'un vers l'autre, et en ce qu'un ressort à bras (270) situé entre eux peut être fixé de telle manière qu'un loquet de blocage respectif (50, 50') est appliqué contre un bras du ressort en vue d'être sollicité par un effort.
